# EUROPÄISCHE PATENTSCHRIFT

(11) **EP 0 555 665 B1**
(45) Veröffentlichungstag und Bekanntmachung des Hinweises auf die Patenterteilung: **27.03.1996**
(21) Anmeldenummer: 93100852.8
(22) Anmeldetag: 21.01.1993
(51) Int. Cl.: H02G 5/08

(54) **Abgangskasten, insbesondere für Schienenverteiler**
Outlet box, especially for busways
Coffret de sortie, notamment pour répartiteur de barres omnibus

(30) Priorität: 13.02.1992 DE 9201816 U
(43) Veröffentlichungstag der Anmeldung: 18.08.1993
(73) Patentinhaber: Klöckner-Moeller GmbH, D-53115 Bonn (DE)
(72) Erfinder: Ammann, Eckhard, Dipl.-Ing., W-5206 Seelscheid (DE); Möller, Hans, W-5300 Bonn 1 (DE)

(56) Entgegenhaltungen:
- DE-B- 1 089 845
- FR-A- 1 247 444
- FR-A- 2 649 834
- US-A- 4 912 599

## Beschreibung

Die Erfindung betrifft einen Abgangskasten nach dem Oberbegriff des Anspruches 1.

In Fabrikbetrieben, in denen Stromverbraucher oft gewechselt werden müssen, werden Schienenverteiler mit starren Stromschienen, in der Regel Flachschienen, eingesetzt.

Der Stromabzweig wird mittels Abzweigkästen realisiert, die ein Kontaktorgan zur elektrischen Verbindung der Stromschienen aufweisen.

Die Abzweigkästen weisen Schalt- oder Schutzgeräte oder aber auch Schmelzsichrerungen auf, die den Abzweigleitungen zwischengeschaltet sind.

Lichtbögen, die beim Trennen der Kontaktorgane unter Last entstehen, verschlechtern die Kontaktstellen der Stromschienen.

Derartige Abgangskästen sind außerdem in der Weise auszubilden, daß eine Gefährdung des Bedienungspersonals durch Berührung spannungsführender Teile oder die Bildung von Lichtbogen verhindert wird.

Weiterhin ist man bestrebt, die Befestigungs- und Verriegelungsvorrichtung möglichst platzsparend auszubilden, um den Einbauraum gut auszunutzen.

Aus der FR-OS 88 04 262 ist ein Abgangskasten bekannt geworden, bestehend aus einem unter Federwirkung stehenden Schraubenbolzen und einem Verriegelungselement.

Der Schraubenbolzen, der ferner zur Befestigung des Gehäusedeckels dient und nur von der dem Schienenkanal anliegenden Gehäuseseite zugänglich ist, wird beim Aufdrehen durch die Federwirkung bis zu einer Verriegelungsposition automatisch herausgezogen und durch das Verriegelungselement blockiert, derart, daß ein Aufsetzen des Abgangskastens nicht möglich ist.

Das Entriegeln wird durch das Montieren des Gehäusedeckels bewirkt.

Es ist also sichergestellt, daß spannungsführende Teile nicht berührt werden können, da der Gehäusedeckel nur bei herausgezogenem Abgangskasten abmontierbar ist bzw. nicht bei aufgesetztem Abgangskasten entfernt werden kann.

Diese Lösung ist jedoch nur für den Abzweig kleinerer Leistung geeignet.

Bei größeren Leistungen werden Abgangskästen mit Lasttrenneigenschaften eingesetzt.

Derartige Abgangskästen sind mit einem oben erläuterten Kontaktorgan versehen und mit einem weiteren, meistens durch die Öffnungsbewegung des Gehäusedeckels trennbaren und im Gehäuse befindlichen Kontaktorgan versehen.

Die Wirkungsweise dieser Abgangskästen ist folgende:

Der Abgangskasten läßt sich nur von der Abgangsstelle entfernen, d.h., die Stromverbindung der Stromschienen mit dem ersten Kontaktorgan unterbrechen, wenn sichergestellt ist, daß die Kontaktverbindung stromlos ist. Dies wird dadurch erreicht, daß zwangsläufig immer nur das zweite Kontaktorgan die Stromverbindung unterbrechen kann.

Umgekehrt gilt dieses für das Anschließen des Abgangskastens.

Das zweite Kontaktorgan weist in der Regel eine Abschottung oder einen sonstigen Schutz gegen die unkontrollierte Ausblasung ionisierter Gase infolge der Lichtbögen auf.

Ein entstandener Schaden bleibt auf den Abgangskasten beschränkt, so daß alle anderen Stromverbraucher, die den anderen Abgangsstellen zugeordnet sind, nicht abgeschaltet werden müssen. Es kann also kein Schaden im Schienenkanal eintreten.

Ein Abgangskasten der gattungsgemäßen Art ist in der DE-AS 1 131 769 gezeigt und beschrieben.

In dieser Schrift ist vorgeschlagen, ein innen an der Gehäuseseitenwand angeordnetes Hakenglied zu verwenden, bestehend aus U-Schenkeln und Laschen, welches mittels einer Schraube, Feder- und Führungselementen die Befestigung des Abgangskasten sichert.

Das Hakenglied hintergreift in der verriegelten Stellung eine Flanke des Schienenkanals.

Eine Entriegelung kann mittels der von außen zugänglichen Schraube nur erfolgen, wenn der Gehäusedeckel bereits geöffnet ist, d.h. also die elektrische Verbindung des zweiten Kontaktorgans unterbrochen worden ist. Dies wird dadurch erreicht, daß das Hakenglied bei geschlossenem Deckel blockiert ist.

Nachteilig bei dieser Lösung ist, daß sie relativ aufwendig ist, daß ein Teil des Entriegelungsorgans, nämlich der Schraubenkopf, von außen zugänglich ist, wodurch bei unsachgemäßer Behandlung das Gewinde beschädigt werden kann, und daß nur eine Gehäusebreite möglich ist.

Aufgabe der Erfindung ist es deshalb, einen Abgangskasten nach dem Oberbegriff des Anspruches 1 zu schaffen, der einfach im Aufbau und in der Handhabung ist und eine hohe elektrische und mechanische Sicherheit bietet.

Die Aufgabe der Erfindung wird durch die kennzeichnenden Merkmale des Anspruches 1 gelöst, während in den Ansprüchen 2 bis 10 besonders vorteilhafte Weiterbildungen der Erfindung gekennzeichnet sind.

Durch die Erfindung wird mit einfachen Mitteln ein Abgangskasten mit einer robusten Befestigungs- und Verriegelungsvorrichtung geschaffen, die eine hohe Sicherheit bietet und gleichzeitig den Abgangskasten sicher befestigt.

Eine besonders sichere Ausführung des Befestigungs- und Verriegelungselementes geht aus Anspruch 2 hervor. Hier wird sowohl eine sichere Befestigung, als auch ein unzulässiges Aufsetzen des Abgangskastens mit einem einzigen Element realisiert.

Besonders günstig ist es, wenn die Achse bodenseitig angeordnet ist (Anspruch 3), weil dadurch im Gegensatz zum Stande der Technik die Breite des Abgangskastens unabhängig von der Befestigungs- und Verriegelungsvorrichtung wird.

Damit das Befestigungs- und Verriegelungselement sicher gegen eine Flanke des Schienenkanals gedrückt wird, steht die Achse axial unter Federwirkung.

Eine besonders günstige Anordnung der Feder geht weitehin aus den Merkmalen des Anspruches 3 hervor.

Durch die Anordnung der Erdungsscheibe 6 wird die Erdung des Abgangskastens in einfacher Weise verbessert, weil der Erdungskontakt durch die Federkraft unterstützt wird.

Von besonderem Vorteil ist es, wenn die Besfestigungs- und Verriegelungsvorrichtung nur innerhalb des Abgangskastens, also bei geöffnetem Deckel, zugänglich ist, wie aus Anspruch 4 hervorgeht. Hierdurch ist zugleich eine zwangsläufige Auftrennung z.B eines Lasttrenners gegeben.

Eine automatische Erhöhung der Federkraft durch eine einfache Drehbewegung wird durch das charakteristische Merkmal des Anspruches 5 erreicht.

Eine besonders einfache und sichere Maßnahme zur Verhinderung einer unzulässigen Freigabe elektrischer Energie wird durch das Merkmal des Anspruches 6 bewirkt.

Besonders günstig ist es, wenn die Achse gemäß der kennzeichnenden Merkmale des Anspruches 7 ausgeführt ist, weil damit alle Teile auf der Achse unverdrehbar und eindeutig positioniert sind.

Eine einfache Handhabung und eine robuste Ausgestaltung des Sperrteiles für die Betätigung mit der Hand wird durch die Merkmale des Anspruches 8 erreicht.

Dadurch, daß eine keilartige Steigung in der Sperrstellung durch die Drehbewegung zwischengeklemmt wird, ist das Sperrteil weitgehend gegen ein Abbrechen geschützt, so daß das Sperrteil auch als Kunststoff bzw. Isolierstoff bestehen kann.

Soll die Befestigungs- und Verriegelungsvorrichtung nur mit einem Werkzeug betätigbar sein, dann ist es von besonderem Vorteil, den Abgangskasten mit den Merkmalen des Anspruches 9 zu versehen.

Durch die Merkmale des Anspruches 10 ist ein gewaltsames Drehen des Befestigungs- und Verriegelungselementes von außen besonders erschwert.

Weitere Vorteile der Erfindung sind in einer verbesserten Handhabung und in der Platzersparnis zu sehen.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine Darstellung des erfindungsgemäßen Abgangskastens,
- Fig. 2: eine Darstellung des Kontaktgehäuses mit dem in Sperrstellung befindlichen Sperrteil in Ansicht von oben,
- Fig. 3a: eine Darstellung des Verriegelungs- und Befestigungselementes, bei der der Abgangskasten dem Schienenkanal aufgesetzt ist und sich das Verriegelungs- und Befestigungselement in Befestigungsstellung befindet,
- Fig. 3b: eine Darstellung des Verriegelungs- und Befestigungselementes in Sperrstellung,
- Fig. 4: eine Darstellung des Kontaktgehäuses mit dem in Freigabestellung befindlichen Sperrteil in Ansicht von oben,
- Fig. 5: eine Einzeldarstellung des Verriegelungs- und Befestigungselementes,
- Fig. 6: eine Ansicht des in Fig.5 gezeigten Elementes von unten,
- Fig. 7: eine Einzeldarstellung des Sperrteiles,
- Fig. 8: eine Ansicht des in Fig.7 gezeigten Teiles von oben,
- Fig. 9: eine Einzeldarstellung der Erdungsscheibe,
- Fig. 10: eine Aufsicht der in Fig.9 gezeigten Erdungsscheibe,
- Fig. 11: eine andere Ausführung für die Betätigung mit einem Werkzeug,
- Fig. 12: eine Darstellung des in der Fig.11 gezeigten Abgangskastens, wobei hier der eine Deckelabschnitt durch den anderen blockiert ist,
- Fig. 13: eine Darstellung des in der Fig.11 gezeigten Abgangskastens in Sperrstellung,
- Fig. 14: eine Darstellung des in der Fig.11 gezeigten Abgangskastens in Betriebsstellung,
- Fig. 15: eine Aufsicht auf den mit der Achse verbundenen Winkel,
- Fig. 16: eine Schnittdarstellung gemäß der Schnittlinie A-B in der Fig 15 und
- Fig. 17: eine Darstellung der keilartigen Steigung,

Der Abgangskasten 3 besteht aus einem ersten Kontaktorgan 1, das die elektrische Verbindung zu den Stromschienen 4 herstellt und einem zweiten Kontaktorgan 2 mit Kontakten 5 und damit korrespondierenden Gegenkontakten 6, welches als Lasttrenner ausgeführt ist.

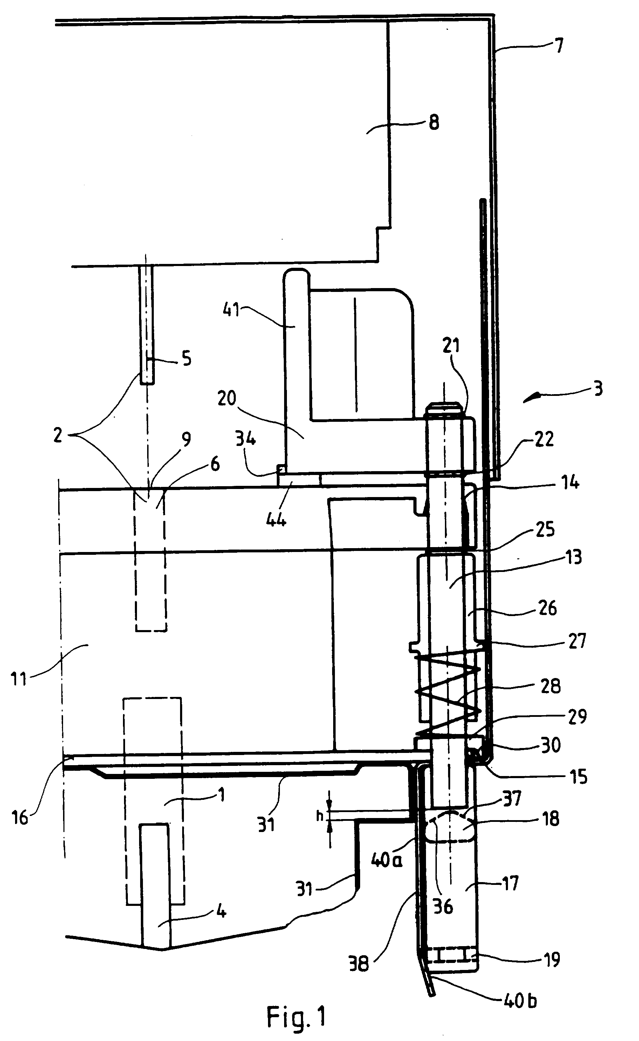

Die Kontaktorgane 1 und 2 sind in der Fig.1 angedeutet.

Weiterhin sind die Gegenkontakte 6 elektrisch mit dem Kontaktorgan 1 verbunden.

Die Kontakte 5 sind U-förmige bzw. hufeisenförmige Kontaktelemente, die mit dem Deckel 7 mechanisch verbunden und durch ein Isoliergehäuse 8 von diesem elektrisch isoliert sind.

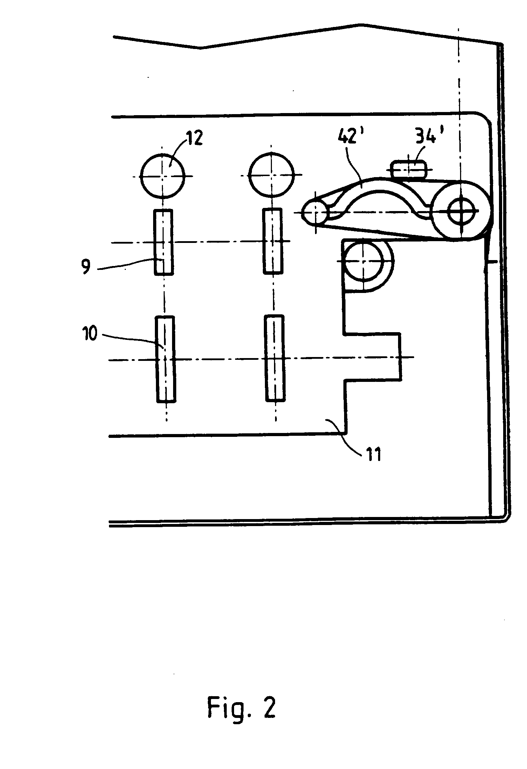

Die Schenkel der Kontakte 5, von denen nur einer in der Fig.1 zu erkennen ist, ragen aus dem Isoliergehäuse 8 durch Öffnungsschlitze 9 und 10, die in der Fig 2 mit den Bezugszeichen 9 und 10 versehen sind, in die Gegenkontakte 6 und bilden eine Kontaktbrücke, wenn der Deckel geschlossen ist.

Beide Öffnungsschlitze 9 und 10 sind einem Kontakt 5 zugeordnet.

Die Gegenkontakte 6 sind in einem Kontaktgehäuse 11 eingebettet, an dem die eben erwähnten Öffnungsschlitze 9 und 10 vorhanden sind.

Die nicht dargestellten Leitungen zu den Schaltgeräten werden im Kontaktgehäuse 11 angeschlossen. Die Fig.2 zeigt die Öffnungen 12 für die Anschlußklemmen.

Das zweite Kontaktorgan 2 kann auch, wie später gezeigt wird, ein NH-Sicherungslasttrenner sein oder aber auch die in einem Schaltgerät vorhandenen Kontakte.

In diesem Beispiel ist die Achse 13 zum einen durch eine Bohrung 14 am Kontaktgehäuse 11 und durch eine weitere Bohrung 15, die am Boden 16 des Abgangskastens 3 angeordnet ist, hindurchgeführt und um ihre Längsachse drehbar angeordnet.

Die Achse 13 ragt durch den Boden 16 des Abgangskastens 3. Außerhalb des Bodens 16 ist dort ein Befestigungs- und Verriegelungselement 17 vorhanden, der starr mit der Achse 13 gekoppelt ist.

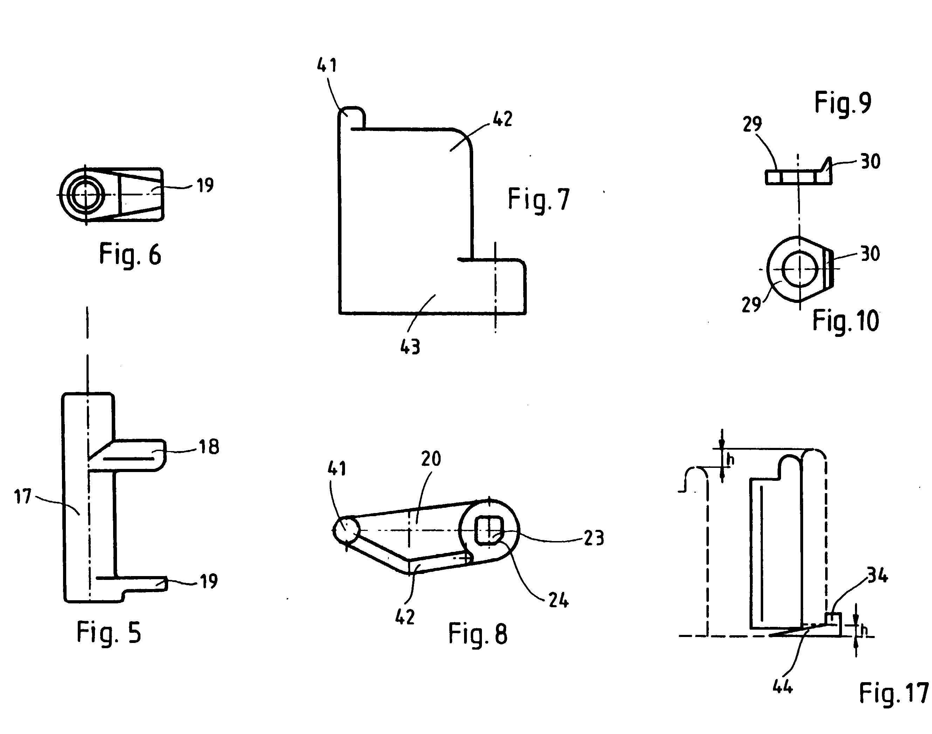

Das Befestigungs- und Verriegelungselement 17, das in den Figuren 5 und 6 als Einzelteil dargestellt ist, weist einen Befestigungszapfen 18 und einen Sperriegel 19 auf.

In dem über der Bohrung 14 hinausragenden Bereich der Achse 14 ist ein Sperrteil 20 mittels Sicherungselementen 21 und 22 axial festgelegt.

Die Achse 13 weist einen Querschnitt auf, der der im Sperrteil 20 vorhandenen Durchgangsöffnung 23, die in Fig. 8 gezeigt ist, entspricht.

Diese Durchgangsöffnung 23 ist im wesentlichen quadratisch und mit einer abgeschrägten Ecke 24 versehen. Hierdurch wird zum einen eine unverdrehbare Festlegung des Sperrteiles 20 mit der Achse 13 erreicht und zum anderen läßt sich das Sperrteil 20 nur in einer bestimmten Position auf die Achse 13 aufsetzen.

Unterhalb der Bohrung 14 ist ein drittes Sicherungselement 25 angeordnet, an dem sich eine unter Federkraft stehende Führungsbuchse 26 abstützt.

Die Führungsbuchse 26, die einen ringförmigen Querschnitt aufweist, ist etwa in der Mitte mit einer umlaufenden Querschnittsvergrößerung 27 versehen.

Die Feder 28 ist zwischen dieser Querschnittsvergrößerung 27 und einer den Boden 16 des Abgangskastens berührenden Erdungsscheibe 29 festgelegt.

Die Erdungsscheibe 29 ist mit einem Vorsprung 30 versehen, der die Erdung des Abgangskastens 3 verbessert. Eine Einzeldarstellung dieser Erdungsscheibe 29 ist in den Figuren 9 und 10 dargestellt.

Am unteren Ende der Achse 13 ist außerhalb des Abgangskastens 3 das Befestigungs- und Verriegelungselement 17 angeordnet, das aus einem im wesentlichen zylindrischen Körper, dem Befestigungszapfen 18 und dem Sperriegel 19 besteht.

Der Befestigungszapfen 18, wie in den Figuren 1,5 und 6 gezeigt ist, ist mit Steigungen 36 und 37 versehen. Dieser befindet sich in der Fig.1 hinter dem zylindrischen Körper und ist daher gestrichelt (unsichtbar) eingezeichnet.

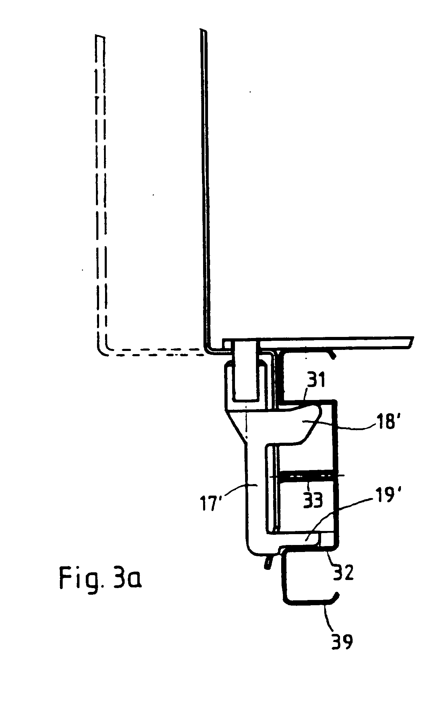

Das Schienengehäuse 39 hat, wie insbesondere in der Fig.3a zu erkennen ist, einen nach innen gebogenen Blechabschnitt mit einer oberen Flanke 31, einer unteren Flanke 32 und einer zwischen den Flanken 31,32 angeordneten Falz 33, wobei das in dieser Darstellung gezeigte Befestigungs- und Verriegelungselement 17' eine andere Ausführungsform ist.

Zwischen dem Befestigungs- und Verriegelungselement 17 und dem Schienengehäuse 39 ist ein Führungsabschnitt 38 in erster Linie zur Führung des Abgangskastens 3 beim Aufsetzen auf dem Schienenkanal angeordnet. In diesem Führungsabschnitt 38 sind ein Ausbruch 40a für den Befestigungszapfen 18 und ein Ausbruch 40b für den Sperriegel 41 vorhanden.

Das Sperrteil 20 ist in diesem Ausführungsbeispiel zugleich als Handhabe ausgebildet. Dieses besteht, wie in den Figuren 8 und 9 zu sehen ist, aus einem Sperrstift 41 und einem Handhabungsabschnitt 42, die beide an einem Grundkörper 43 einstückig angeformt sind, welches die Durchgangsöffnung 23 aufweist.

Es ist ferner noch ein Anschlag 34 auf dem Kontaktgehäuse 11 vorhanden, der die Drehbewegung des Sperrteiles 20 begrenzt und wie in der Fig. 17 gezeigt, mit einer Steigung versehen sein kann.

Die Wirkungsweise der Befestigungs- und Verriegelungsvorrichtung wird im folgenden beschrieben.

Es sei bemerkt, daß die mit einem Hochstrich versehenen Bezugszeichen (Fig.2, Fig.3a, Fig.3b, Fig.4) einer anderen Ausführungsform zugeordnet sind, die aber an der prinzipiellen Wirkungsweise nichts ändert.

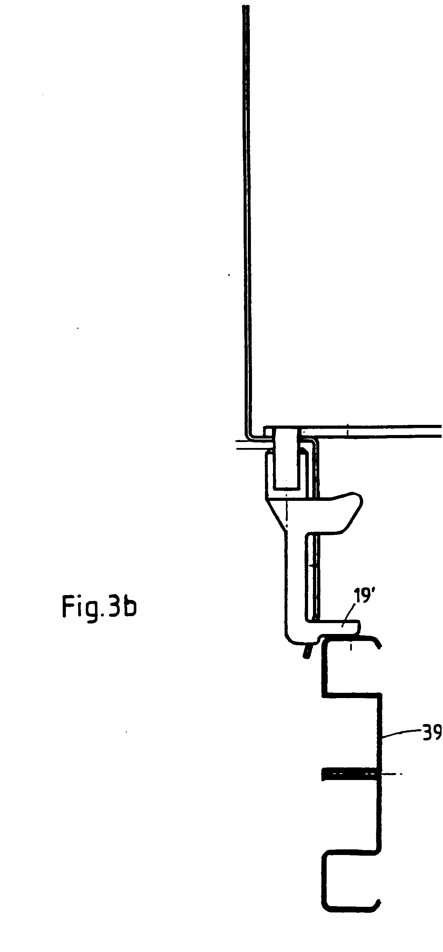

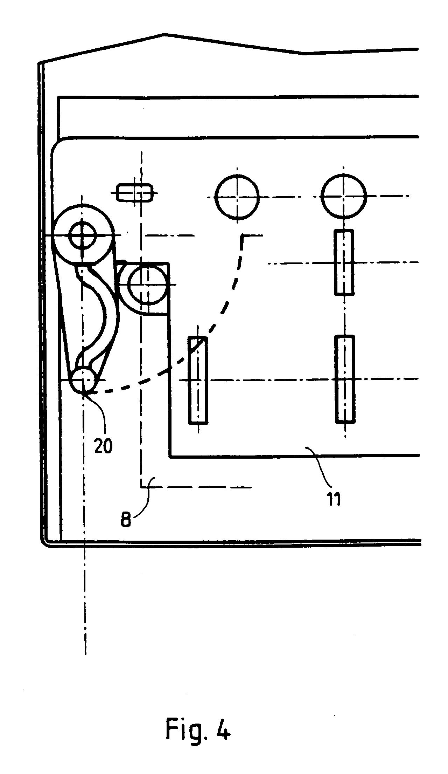

In den Figuren 1 und 2 ist die Befestigungs- und Verriegelungsvorrichtung in der Sperrposition in bezug auf den Deckel 7 gezeigt, wobei zur Darstellung der rechte Teil des Abgangskastens 3 abgebildet ist, während in den Figuren 3a, 3b und 4 der Deckel 7 geschlossen sein kann, d.h. das zweite Kontaktorgan 2 kann eine elektrische Verbindung herstellen, wobei hier nur der linke Teil gezeigt ist.

In der Sperrposition ist der Sperrstift 41 zwischen dem Kontaktgehäuse 11 und dem Isoliergehäuse 8 positioniert, derart, daß die Kontakte 6 keine Strombrücke mit den Gegenkontakten 6 bilden können. Solange diese Position beibehalten wird, kann das erste Kontaktorgan 1 die Stromschienen nur stromlos kontaktieren.

Versucht man dagegen den Abgangskasten 3 trotz elektrischer Verbindung der Kontakte 5 mit den Gegenkontakten 6 auf dem Schienenkanal aufzusetzen, also bei geschlossenem Deckel 7, so ist Voraussetzung für das Schließen des Deckels 7, daß das Sperrteil 20, gemäß der Fig 4, vorher um 90 Grad geschwenkt worden ist, also der Sperrstift freiliegt. Ein Aufsetzen wird jedoch durch den um 90 Grad versetzten Sperriegel 19' verhindert, wie in der Fig. 3b gezeigt ist.

Erst, wenn der Abgangskasten 3 mit geöffnetem Deckel 7 aufgesetzt worden ist (Fig.1, Fig.2), kann der Befestigungszapfen 18,18' die Flanke 31 des Schienengehäuses 39 (Fig.3a) hintergreifen, wenn das Sperrteil 20 um 90 Grad gedreht wird (Fig.4).

Nach Schließen des Deckels 7 kann nun der Strom durch beide Kontaktorgane 1 und 2 fließen. Der Abgangskasten 3 ist aber jetzt fest und sicher arretiert (Fig.3a).

Ist es erwünscht, den Abgangskasten 3 von dem Schienenkanal zu entfernen, muß der Deckel 7 zwangsläufig geöffnet werden, um mit Hilfe des Sperrteiles 20 eine Entriegelung zu bewirken.

Es ist also nicht möglich, den Abgangskasten 3 unter Last zu ziehen.

Bei offenem Deckel 7 sind alle spannungsführenden Teile fingersicher isoliert und daher vor Berührung sicher.

Die Befestigung des Abgangskastens 3 wird durch eine Feder 28 unterstützt. Die Feder 28 sorgt dafür, daß der Befestigungszapfen 18 gegen die Flanke 31 gedrückt wird.

Die Feder 28 wird stärker zusammengedrückt und übt eine größere Kraft aus, wenn der Abgangskasten 3 befestigt ist (Fig.3a), als wenn der Abgangskasten 3 entriegelt ist (Fig.4).

Es muß daher ein Hub h überwunden werden, der von der Flanke 31 und dem Befestigungszapfen 18 bestimmt ist. Zu diesem Zweck ist der Befestigungszapfen 18 mit Steigungen 36 und 37 versehen, die bei der Drehbewegung von der in Fig.1 gezeigten Stellung in die in Fig.3a gezeigten Stellung den Hub h zu überwinden helfen.

Der Befestigungszapfen ist mit zwei symmetrisch angeordneten Steigungen versehen, wodurch sich dieser beidseitig im Schienenkanal verwenden läßt.

Eine am Anschlag 34 vorhandene Steigung 44, die in Fig.17 angedeutet ist, ist dafür vorgesehen, damit keine übermäßige mechanische Beanspruchung des Sperrteiles 20 eintritt.

Beim Versuch, den Deckel 7 unzulässig zu schließen, wie aus der Fig.1 und der Fig.17 zu erkennen ist, würde ohne die Steigung 44 das Sperrteil 20 um den Hub h bewegt werden können, möglicherweise unter einer starken Nachfederung. Der Sperrstift 41 ist aber zur Achse 13 versetzt angeordnet, was eine mechanische Beanspruchung ohne die Steigung 44 im Bereich der Durchgangsöffnung 23 mit sich bringen würde.

Es ist also vorteilhaft, den Sperrstift durch die Steigung 44 zu stützen.

Mit der keilartig wirkenden Steigung 44 kann daher das Sperrteil 20 auch als Isolierstoff ausgeführt sein, ohne daß die Gefahr eines Abbrechens besteht.

Es ist zu beachten, daß die Breite des Abgangskastens 3 unabhängig von der Befestigungs- und Verriegelungsvorrichtung ist, da diese nicht an der Seitenwand befestigt ist, wodurch der Abgangskasten 3 mit einem wesentlich größeren Geräteraum versehen werden kann. Ein vergrößerter Abgangskasten ist durch die gestrichelten Linien in der Fig. 3a angedeutet.

Ist der Abgangskasten 3 aufgesetzt und verriegelt, dann kann die Achse 13 von außen auch nicht gewaltsam gedreht werden, weil das in der Kammer zwischen dem Isoliergehäuse 8 und dem Deckel 7 befindliche Sperrteil 20 dies verhindert.

Die Befestigungs- und Verriegelungsvorrichtung gemäß der Erfindung kann in einfacher Weise für einen weiteren Abgangskasten 3', welcher im folgenden beschrieben ist, eingesetzt werden.

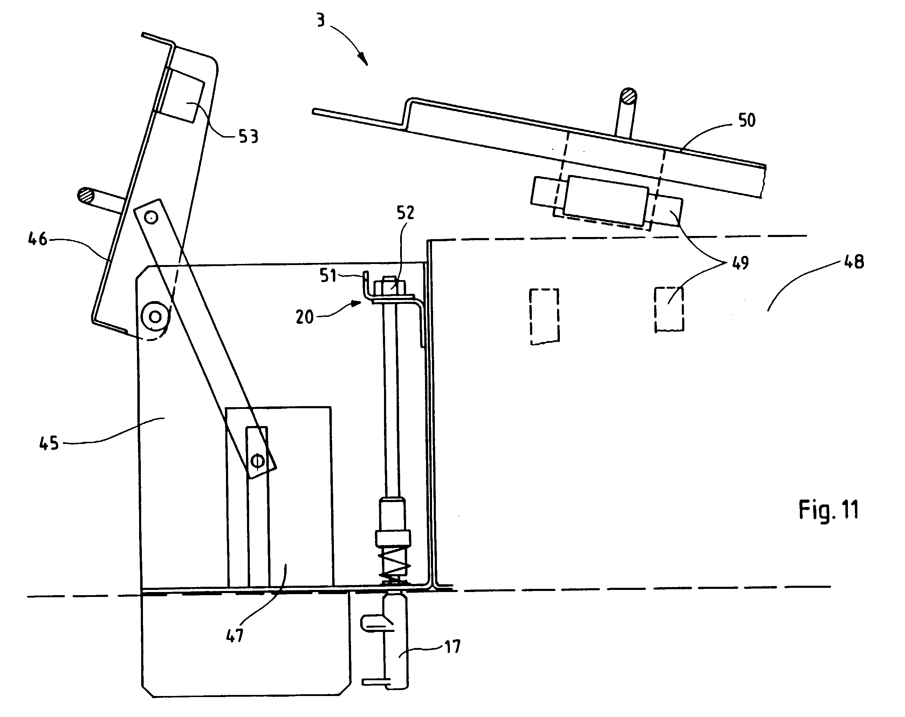

Dieser Abgangskasten 3' besteht, wie in der Fig.11 zu erkennen ist, aus einem Kastenabschnitt 45 für mit einem Deckelabschnitt 46 versenkbaren Kontakten 47, auch als Einfahrkontakte bekannt, als erstes Kontaktorgan 1 und einem weiteren Kastenabschnitt 48 mit einem durch die Öffnungsbewegung eines zweiten Deckelabschnittes 50 betätigbaren NH-Sicherungslasttrenner 49 als zweites Kontaktorgan.

Im Gegesatz zur oben erläuterten Ausführung ist das Sperrteil 20' nicht als Handhabe, sondern durch ein Werkzeug zu betätigen.

Dieses Sperrteil 20' besteht nun aus einer Mutter 52 zur Betätigung und einem L-förmigen Winkel 51, welches mit einem in dem ersten Deckelabschnitt 46 angeordneten weiteren L-förmigen Winkel 53 korrespondiert.

Das Befestigungs- und Verriegelungselement 17 entspricht dem oben erläuterten in Funktion und Aufbau.

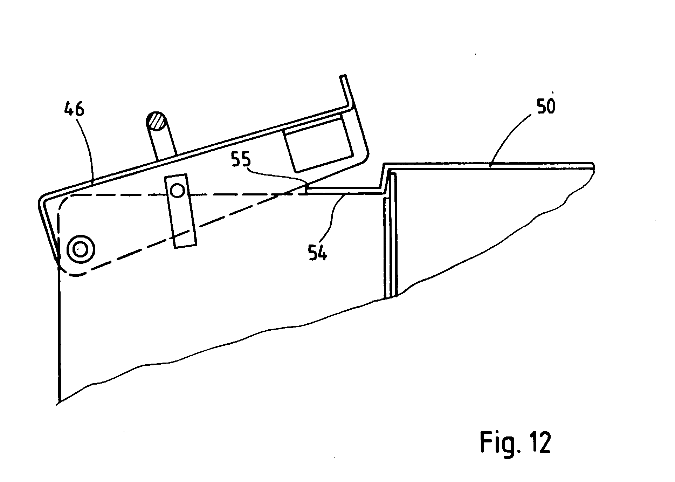

Wie in der Fig. 12 zu sehen ist, kann der erste Deckelabschnitt 46 nicht geschlossen werden, solange der zweite Deckelabschnitt 50 geschlossen ist, wodurch kein Schienenkontakt bei geschlossenem NH-Sicherungskontakt möglich ist. Dies wird einfach dadurch verhindert, daß eine Kante 55 des ersten Deckelabschnittes 46 an einem Sperrlappen 54 anstößt.

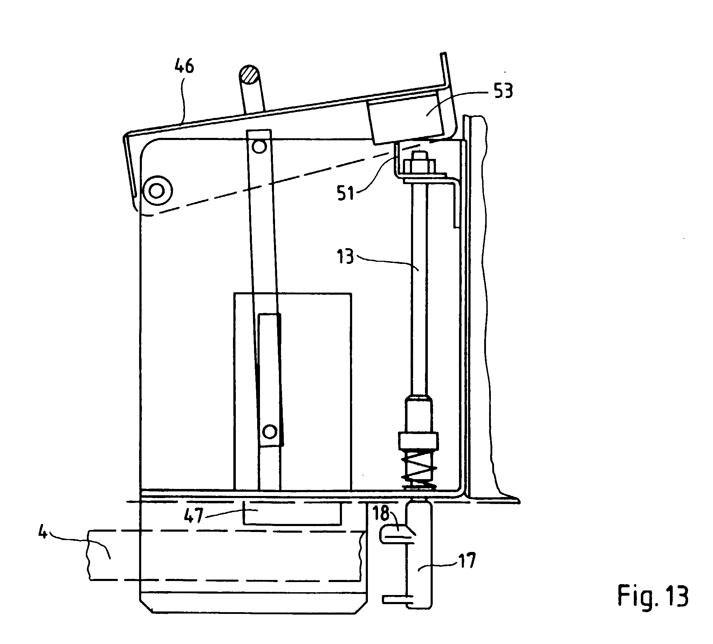

Aus der Fig.13 ist zu erkennen, wie der mit der Achse 13 verbundene Winkel 51 den Deckelabschnitt 46 blockiert, wenn der Befestigungszapfen 18 des Befestigungs- und Verriegelungselementes 17 nicht die Flanke 31 des Schienengehäuses 39 ordnungsgemäß hintergreift, bzw. der Abgangskasten 3' nicht sicher an dem Schienenkanal befestigt ist, wie in der Fig. 3a gezeigt ist. Dadurch wird eine elektrische Verbindung der Kontakte 47 mit den Stromschienen 4 verhindert.

Dies wird dadurch gelöst, daß die zwei zueinanderstehenden Schenkel der Winkel 51 und 53 in dieser Position um 90 Grad versetzt angeordnet sind.

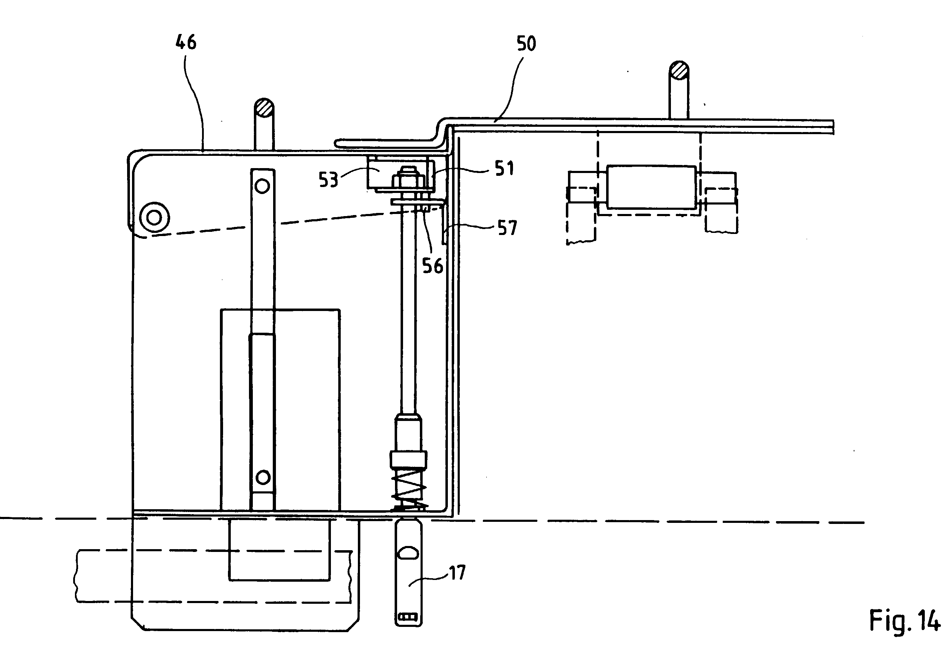

Erst dann, wenn eine vorschriftsmäßige Drehung des Befestigungs -und Verriegelungselementes 17 erfolgt ist, wie in der Fig. 14 dargestellt ist, können die Deckelabschnitte 46 und 50 in richtiger Reihenfolge verschlossen werden.

Die Schenkel der Winkel 51 und 53 stehen hier parallel zueinander und behindern nun die Deckelbewegung des ersten Deckelabschnittes 46 in keiner Weise.

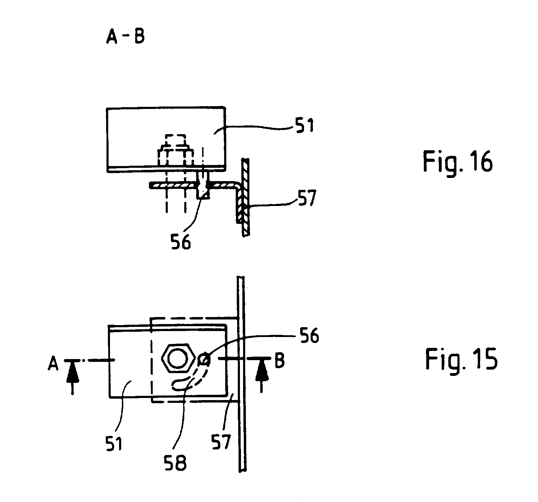

Eine Begrenzung der Drehbewegung der Achse 13 um 90 Grad erfolgt hier durch einen am L-Winkel 51 vorhandenen Stift 56 und einem an einem Befestigungswinkel 57 ausgebildeten Führungsschlitz 58, wie in den Figuren 15 und 16 gezeigt ist.

## Patentansprüche

1. Abgangskasten (3), insbesondere für Schienenverteiler, mit mindestens einer Befestigungs- und Verriegelungsvorrichtung, insbesondere für Schienenverteiler, mit einem ersten Kontaktorgan (1) zur elektrischen Verbindung der Stromschienen (4) in dem Schienenkanal und einem zweiten Kontaktorgan (2), welches derart wirkt, daß die Kontaktherstellung und Kontakttrennung des ersten Kontaktorgans (1) zwangsläufig nur stromlos erfolgen kann, **dadurch gekennzeichnet**, daß die Befestigungs- und Verriegelungsvorrichtung aus einer um ihre Längsachse drehbare Achse (13) besteht, die ein mit dem Schienenkanal korrespondierendes Befestigungs- und Verriegelungselement (17) und ein mit dem zweiten Kontaktorgan (2) korrespondierendes Sperrteil (20) aufweist.

2. Abgangskasten nach Anspruch 1, dadurch gekennzeichnet, daß das Befestigungs- und Verriegelungselement (17) einen Befestigungszapfen (18) zum Halten des Abgangskastens (3) und einen Sperriegel (19), der ein unzulässiges Aufsetzen des Abgangskastens (3) verhindert, aufweist.

3. Abgangskasten nach Anspruch 1 oder 2, dadurch gekennzeichnet, daß die Achse (13) bodensseitig angeordnet ist, daß die Achse axial unter Federwirkung steht, daß sich die Feder (28) an einer Querschnittsvergrößerung (27) einer Führungsbuchse (26) abstützt und daß sich die Feder (28) an ihrem anderen Ende an einer Erdungsscheibe (29) abstützt.

4. Abgangskasten nach einem der vorhergehenden Ansprüche, dadurch gekennzeichnet, daß die Befestigungs- und Verriegelungsvorrichtung nur innerhalb des Abgangskasten (3) betätigbar ist.

5. Abgangskasten nach einem der vorhergehenden Ansprüche, dadurch gekennzeichnet, daß der Befestigungszapfen (18) mit mindestens einer Steigung (36, 37) versehen ist.

6. Abgangskasten nach einem der vorhergehenden Ansprüche, dadurch gekennzeichnet, daß das Sperrteil (20) einen durch die Öffnungsbewegung eines Deckels (7) wirkenden Lasttrenner bei nicht befestigtem Abgangskasten (3) blockiert.

7. Abgangskasten nach einem der vorhergehenden Ansprüche, dadurch gekennzeichnet, daß die Achse (13) einen im wesentlichen vierkantförmigen Querschnitt aufweist und daß der Querschnitt der Achse (13) eine abgeschrägte Ecke (24) aufweist.

8. Abgangskasten nach einem der vorhergehenden Ansprüche, dadurch gekennzeichnet, daß das Sperrteil (20) aus einem einstückig angeformten Sperrstift (41) und einem ebenfalls einstückig angeformten und im wesentlichen mit dem Sperrstift (41) verbundenen Handhabungsabschnitt (42) besteht, daß das Sperrteil (20) aus Isolierstoff besteht, daß die Drehbewegung des Sperrteiles (20) durch einen Anschlag (34) begrenzt wird und daß dem Anschlag (34) eine keilartige Steigung (44) angeformt ist.

9. Abgangskasten nach einem der Ansprüche 1 bis 6, dadurch gekennzeichnet, daß das Sperrteil (20) aus einem Winkel (51) besteht, daß der Winkel (51) L-förmig ist, daß das Sperrteil (20) mit einem an dem Deckel (7) oder Deckelabschnitt (46) angeordneten Winkel (53) korrespondiert, daß beide Winkel (51,53) einander um etwa 90 Grad versetzt sind, wenn diese sich gegenseitig blockieren und daß die Drehbewegung der Achse (13) durch einen an dem Winkel (51) vorhandenen Stift (56) und einem an einem Befestigungswinkel (57) ausgebildeten Führungsschlitz (58) begrenzt ist.

10. Abgangskasten nach einem der vorhergehenden Ansprüche, dadurch gekennzeichnet, daß der Abgangskasten (3) Führungsabschnitte (38) mit darin befindlichen Ausbrüchen (40a,40b) für das Befestigungs- und Verriegelungselement (17) aufweist.

## Claims

1. Distribution box (3), especially for bus-bar distributors with at least one fixing and locking device, especially for bus-bar distributors, with a first contact component (1), allowing the electrical connection of the bus bars (4) with the bus-bar way, and a second contact component (2) which acts in such a way that the contact making and the contact separation of the first contact component (1) can only and and in a compulsory way be brought about in a de-energized condition, wherein the fixing and locking device consists of an axle (13) which can be turned around its longitudinal axis and which presents a fixing and locking element (17), corresponding with the bus-bar way, and a blocking element (20), corresponding with the second contact component (2).

2. Distribution box as claimed in claim 1, wherein the fixing and locking element (17) presents a fixing pin (18) allowing to hold the distribution box (3) and a blocking bar (19) which prevents an inadmissible surface touching of the distribution box (3).

3. Distribution box as claimed in claim 1 or 2, wherein the axle (13) is arranged at the bottom side, wherein the axle is submitted to axial spring action, wherein the spring (28) is supported by an enlarged cross-section (27) of a guide bush (26) and wherein the spring (28) is supported by an earthing/grounding plate (29) at its other end.

4. Distribution box as claimed in any of the above-mentioned claims, wherein the fixing and locking device can only be operated inside the distribution box (3).

5. Distribution box as claimed in any of the above-mentioned claims, wherein the fixing pin (18) is provided with at least one slope (36, 37).

6. Distribution box as claimed in any of the above-mentioned claims, wherein the blocking element (20) blocks a load-interrupter when the distribution box (3) is not fixed, this load-interrupter acting by means of the opening movement of a cover (7).

7. Distribution box as claimed in any of the above-mentioned claims, wherein the axle (13) presents a cross-section which is essentially shaped in a four-edged way and wherein the cross-section of the axle (13) presents a bevelled edge (24).

8. Distribution box as claimed in any of the above-mentioned claims, wherein the blocking element (20) consists of a blocking pin (41) formed as a single piece and of a manipulation section (42) being formed as a single piece as well and being essentially connected to the blocking pin (41), wherein the blocking element (20) consists of insulating material, wherein the turning movement of the blocking element (20) is limited by means of a stop (34) and wherein a wedge-like slope (44) is formed at the stop (34).

9. Distribution box as claimed in any claim 1 through 6, wherein the blocking element (20) consists of an angle (51), wherein the angle (51) is L-shaped, wherein the blocking element (20) corresponds with an angle (53) arranged at the cover (7) or at the cover section (46), wherein both angles (51, 53) are offset by approximately 90 degrees with regard to one another when these angles block one another, and wherein the turning movement of axle (13) is limited by means of a pin (56) located at the angle (51) and by means of a guiding slot (58) formed at a fixing angle (57).

10. Distribution box as claimed in any of the above-mentioned claims, wherein the distribution box (3) presents guide sections (38) with section openings (40a, 40b) located in these guide sections (39) for the fixing and locking element (17).

## Revendications

1. Boîtier de départ (3), en particulier pour canalisations préfabriquées, ayant au moins un dispositif de fixation et de blocage, en particulier pour canalisations préfabriquées, avec un premier organe de contact (1) pour raccordement électrique des barres conductrices (4) à la canalisation des barres et un second organe de contact (2) agissant de telle sorte que l'établissement et l'interruption de contact du premier organe de contact (1) ne puissent être strictement effectués que sans courant, **caractérisé en ce que** le dispositif de fixation et de blocage consiste en un arbre (13) tournant sur son axe longitudinal, ledit arbre présentant un élément de fixation et de blocage (17) correspondant à la canalisation des barres, et une pièce d'arrêt (20) correspondant au second organe de contact (2).

2. Boîtier de départ selon la revendication 1, **caractérisé en ce que** l'élément de fixation et de blocage (17) présente un téton de fixation (18) pour le maintien du boîtier de départ (3), et un pêne de sûreté (19) empêchant un positionnement non autorisé du boîtier de départ (3).

3. Boîtier de départ selon revendication 1 ou 2, **caractérisé en ce que** l'arbre (13) est disposé sur le fond, en ce que l'arbre subit axialement l'effet d'un ressort, en ce que le ressort (28) s'appuie sur un élargissement de la section transversale (27) d'une douille de guidage (26) et en ce qu'à son autre extrémité, le ressort (28) s'appuie sur un disque de terre (29).

4. Boîtier de départ selon l'une des revendications précédentes, **caractérisé en ce que** le dispositif de fixation et de blocage ne peut être actionné qu'à l'intérieur du boîtier de départ (3).

5. Boîtier de départ selon l'une des revendications précédentes, **caractérisé en ce que** le téton de fixation (18) est prévu avec une avancée (36, 37) au moins.

6. Boîtier de départ selon l'une des revendications précédentes, **caractérisé en ce que** la pièce d'arrêt (20) bloque un sectionneur à coupure en charge agissant par le mouvement d'ouverture d'un couvercle (7) lorsque le boîtier de départ (3) n'est pas fixé.

7. Boîtier de départ selon l'une des revendications précédentes, **caractérisé en ce que** l'arbre (13) présente une section transversale essentiellement de forme carrée et en ce que la section transversale de l'arbre (13) présente un angle biseauté (24).

8. Boîtier de départ selon l'une des revendications précédentes, **caractérisé en ce que** la pièce d'arrêt (20) consiste en une broche à déclic (41) formée d'une seule pièce, et en un talon de maniement (42) également formé d'une seule pièce et essentiellement relié à la broche à déclic (41), en ce que la pièce d'arrêt (20) est en matériau isolant, en ce que le mouvement tournant de la pièce d'arrêt (20) est limité par un butoir (34) et en ce qu'une avancée à effet de cale (44) est préformée sur le butoir (34).

9. Boîtier de départ selon l'une des revendications 1 à 6, **caractérisé en ce que** la pièce d'arrêt (20) consiste en une équerre (51), que l'équerre (51) est formée en L, que la pièce d'arrêt (20) correspond à une équerre (53) disposée contre le couvercle (7) ou le segment de couvercle (46), que le placement des deux équerres (51, 53) l'une par rapport à l'autre présente un angle d'environ 90°, lorsqu'elles se bloquent réciproquement, et en ce que le mouvement rotatif de l'arbre (13) est limité par une broche (56) disposée sur l'équerre (51) et par une fente de guidage (58) formée sur une équerre de fixation (57).

10. Boîtier de départ selon l'une des revendications précédentes, **caractérisé en ce que** le boîtier de départ (3) présente des segments de guidage (38) où sont disposées des ouvertures (40a, 40b), pour l'élément de fixation et de blocage (17).
